# EUROPÄISCHE PATENTSCHRIFT

(11) **EP 0 316 908 B1**
(45) Veröffentlichungstag und Bekanntmachung des Hinweises auf die Patenterteilung: **27.01.1993**
(21) Anmeldenummer: 88119127.4
(22) Anmeldetag: 17.11.1988
(51) Int. Cl.: G01F 1/84

(54) **Verfahren zur Massendurchflussmessung nach dem Coriolisprinzip und nach dem Coriolisprinzip arbeitendes Massendurchfluss-Messgerät**
Process for the measurement of mass flow rate using the Coriolis principle and mass flow rate measuring apparatus using the Coriolis principle
Procédé de mesure de débit massique selon le principe de Coriolis et appareil de mesure de débit massique fonctionnant selon le principe de Coriolis

(30) Priorität: 20.11.1987 DE 3739383; 14.03.1988 DE 3808461
(43) Veröffentlichungstag der Anmeldung: 24.05.1989
(73) Patentinhaber: Endress + Hauser Flowtec AG, CH-4153 Reinach BL 1 (CH)
(72) Erfinder: Lang, Michael,, D-7858 Weil-Haltingen, (DE); Donoso, Jaime Dr.,, CH-4153 Reinach BL 1, (CH)
(74) Vertreter: Morstadt, Volker, Dipl.-Ing. c/o Endress + Hauser Flowtec AG

(56) Entgegenhaltungen:
- EP-A- 0 210 308
- EP-A- 0 262 573
- WO-A-85/05677
- WO-A-87/06691
- FR-A- 2 598 801
- PATENT ABSTRACTS OF JAPAN, Band 6, Nr. 237 (P-157)[1115], 25. November 1982;& JP-A-57 137 818
- PATENT ABSTRACTS OF JAPAN, Band 8, Nr. 58 (P-261)[1495], 16. März 1984;& JP-A-58 206 926
- MESSEN PRÜFEN AUTOMATISIEREN, Band 23, Nr. 5, Mai 1987, Seiten 301-305, Bad Wörishofen, DE; W. STEFFEN et al.: "Direkte Massedurchflussmessung, insbesondere mit Coriolisverfahren"
- ATP/AUTOMATISIERUNGSTECHNISCHE PRAXIS, Band 30, Nr. 5, 1988, Seiten 224-230, München, DE; E. AMBERGER et al.: "Unmittelbare Messung des Massedurchflusses mit Hilfe der Coriolis-Kraft"

## Beschreibung

Die Erfindung betrifft nach Anspruch 1 ein Verfahren zur Massendurchflußmessung nach dem Coriolisprinzip mit einem einzigen von Fluid durchströmten, elastisch verformbaren Meßrohr, das periodisch erregt wird und bei dem als Maß für den Massendurchfluß Phasenverschiebungen zwischen Auslenkungen von in Strömungsrichtung unterschiedlich angeordneten Abschnitten der Meßrohrwand gemessen werden.

Ferner betrifft die Erfindung nach Anspruch 8 ein nach dem Coriolisprinzip arbeitendes Massendurchflußmeßgerät, insbesondere zur Durchführung des obigen Verfahrens, mit einem einzigen in eine Fluidleitung einfügbaren, elastisch verformbaren Meßrohr, das periodisch erregt wird und bei dem als Maß für den Massendurchfluß Phasenverschiebungen zwischen Auslenkungen von in Strömungsrichtung unterschiedlich angeordneten Abschnitten der Meßrohrwand gemessen werden.

Es ist bekannt (JP-A 57-137 818), Massendurchlußmessungen mit einem einzigen Meßrohr durchzuführen. Dabei ist es an seinen beiden enden fest eingespannt. In seiner Mitte wird es zu Biegeschwingungen quer zur Strömungsrichtung des Fluids angeregt, d.h. sein Innen- und sein Außenprofil werden in einer Ebene entlang der Strömungsrichtung mit bestimmter Periodendauer verformt. Aufgrund der festen Einspannung an den beiden Enden erstreckt sich über die gesamte Meßrohrlänge eine einzige Halbwelle mit sich periodisch ändernder Ausbauchung. Fließt nun Fluid bestimmter Masse durch das Meßrohr, wird aufgrund auftretender Corioliskräfte die Form der Halbwelle verzerrt (phasenverschoben).

Allerdings verursachen diese Biegeschwingungen in Form einer einzigen Halbwelle eine periodische Wanderung des Schwerpunkts des Massendurchflußmessers. Die Schwerpunktswanderung führt in der Regel zu Vibrationen des Gehäuses des Meßgerätes und der Fluidleitung, in welche der Massendurchflußmesser eingefügt ist. Diese auf die Umgebung übertragenen Vibrationen führen zu einem Verlust an Biegeschwingungsenergie des Meßrohres. Ist die Energieabgabe einlaufseitig und auslaufseitig unterschiedlich, zum Beispiel wegen unterschiedlich fester Einspannungen des Meßrohres, wirkt sich dies auf die zu messenden Phasenverschiebungen aus. Insbesondere kann es zu Verschiebungen des Nullpunkts der Phasenverschiebung und mithin zu Meßungenauigkeiten kommen.

Ferner ist es bekannt (DE-PS 35 05 166), Massendurchflußmessungen mit zwei Meßrohren durchzuführen. Dabei sind die beiden Meßrohre einlauf- und auslaufseitig mittels zweier Rohrverbinder strömungstechnisch parallel geschaltet. Die Meßrohre werden jeweils in gegensinnige Biegeschwingungen versetzt, so daß die Wände des ersten Meßrohres zu denen des zweiten Meßrohres um 180 Grad phasenverschoben ausgelenkt werden. Dadurch wird eine Wanderung des Schwerpunkts des Massendurchflußmessers vermieden. Allerdings ist ein schwingendes Meßrohrsystem mit mindestens zwei Meßrohren notwendig.

Bei einem Massendurchflußmesser der eingangs genannten Art (WO-A 87/06 691) ist ein einziges Meßrohr an seinen beiden Enden fest eingespannt und wird zu Biegeschwingungen in einem höheren, "antisymmetrischen" Schwingungsmode angeregt. Dem entspricht eine Biegeschwingungsform, bei der sich zwei Halbwellen über die gesamte Meßrohrlänge erstrecken. Dabei entstehen drei sogenannte Schwingungsknoten in der Meßrohrmitte, und an den beiden Meßrohrenden und zwischen den Schwingungsknoten kommt es zu einander entgegengesetzten periodischen Ausbauchungen, das heißt, es entstehen zwischen den Schwingungsknoten sogenannte Schwingungsbäuche.

Zwar wird durch die gegensinnig gleiche Ausbauchung des Meßrohres eine periodische Wanderung des Schwerpunkts des Meßgeräts vermieden. Jedoch ist für das Meßrohr an den Stellen, wo die Schwingungsamplituden am größten sind (Schwingungsbäuche), ein oval ausgebildeter Querschnitt notwendig, um dort den Biegewiderstand zu vermindern. Diese Ausbildung des Querschnitts führt in der Herstellung zu einem Mehraufwand. Zudem sind an den Meßrohrenden feste Einspannstellen zur Bildung der Schwingungsknoten notwendig, an denen aufgrund der Biegeschwingungen Drehmomente angreifen. Schließlich wird mit zunehmenden Meßrohrdurchmessern (Nennweiten) die Erzeugung von Biegeschwingungen, insbesondere in einem höheren Schwingungsmode, immer aufwendiger und schwieriger.

Der Erfindung liegt somit die Aufgabe zugrunde, ein Verfahren der eingangs genannten Art zu schaffen, das - unter Vermeidung der genannten Nachteile - mit einem einfach und kostengünstig herstellbaren sowie einfach und kompakt aufgebauten Meßgerät durchführbar ist, das im Betrieb zuverlässig und weitgehend ohne Störeinfluß auf seine Meßumgebung ist, ohne periodische Wanderung seines Schwerpunkts betreibbar ist und auch große Nennweiten bewältigen kann. Diese Aufgabe wird durch ein Verfahren nach Patentanspruch 1 gelöst. Ein zu dessen Durchführung geeignetes Meßgerät ist gemäß Patentanspruch 8 ausgebildet.

Gemäß der Erfindung wird für das Meßrohr ein Schwingungsmode gewählt, in welchem einander symmetrisch zur mittleren Längsachse (Mittelachse) des Meßrohres gegenüberliegende Teile oder Abschnitte der Meßrohrwand gleichsinnig oder gegensinnig, das heißt zueinander in Phase oder um 180° phasenverschoben, ausgelenkt werden. Die Auslenkung der Wände wird durch elastisch-reversible Verformung des Meßrohrquerschnitts erreicht. Fließt aus einer Fluidleitung in das derart periodisch verformte Meßrohr Fluid bestimmter Masse, so muß es einlaufseitig die Energie der Verformungsschwingungen aufnehmen und auslaufseitig diese aufgenommene Energie wieder abgeben. Das bedeutet, daß Corioliskräfte auftreten, die einlaufseitig die Deformation des Meßrohres und damit die Auslenkung der Meßrohrwände verzögern und auslaufseitig beschleunigen. Die so entstehende Phasenverschiebung der Auslenkungen von Abschnitten der Meßrohrwand, die über die Meßrohrlänge unterschiedlich verteilt angeordnet sind, kann zur Bestimmung des Massendurchflusses gemessen werden.

Bei der erfindungsgemäßen Massendurchflußmessung ist es grundsätzlich nicht mehr notwendig, das Meßrohr zu Biegeschwingungen anzuregen. Damit wird der Vorteil erzielt, daß in den Bereichen der festen Einspannung und/oder freien Aufhängung der Meßrohrenden keine Drehmomente angreifen. Ein weiterer Vorteil besteht darin, daß bei Anwendung des erfindungsgemäßen Verfahrens für große Nennweiten - im Vergleich zu herkömmlichen Meßverfahren mit in Biegeschwingungen versetzten Rohren - ein kürzeres Meßrohr verwendet werden kann.

Nach einer zweckmäßigen Ausbildung der Erfindung stimmt der Kehrwert der Periodendauer der Querschnittsverformungen im wesentlichen mit einer der Eigen-/Resonanzfrequenzen von Schwingungen des Umfangs des Meßrohres in Radialrichtung überein. Dadurch kommt es zu einer Auslenkung der Meßrohrwände derart, daß die Lage der Schwerelinie des Meßrohres weitgehend konstant bleibt. Mithin werden bei der erfindungsgemäßen Massendurchflußmessung periodische Wanderungen des Schwerpunktes des Meßgerätes und damit in dessen Umgebung übertragene Vibrationen weitgehend vermieden, ohne daß dabei zusätzlicher, konstruktiver Aufwand notwendig wäre.

Nach einer Weiterbildung der Erfindung wird die Resonanzfrequenz für die Umfangsschwingungen des Meßrohres so ausgewählt, daß ein Schwingungsmode höherer Ordnung entsteht, das heißt es bilden sich auf der Meßrohrwand in Umfangsrichtung des Meßrohres Wellen der Anzahl n mit n größer als Null aus. Dabei entstehen über den Umfang des Meßrohrs gleichmäßig verteilt Schwingungsknoten mit dazwischenliegenden Schwingungsbäuchen, jeweils der Anzahl zweimal n.

Ein zusätzlicher Problempunkt besteht darin, eine ausreichende Meßempfindlichkeit und/oder Schwingungsstabilität zu erzielen. Dem wird mit einer weiteren Ausbildung der Erfindung begegnet, nach der bei dem Meßrohr zusätzlich zu den Umfangsschwingungen Biegeschwingungen erregt werden. Vorteilhaft erscheint es dabei besonders, wenn einerseits für die Biegeschwingungen ein Mode gewählt wird, bei dem längs des Meßrohres zwei Halbwellen mit einem Schwingungsknoten in Meßrohrmitte entstehen (Mode zweiter Ordnung). Dieser Schwingungsknoten trägt zur Erhöhung der Stabilität der Frequenz der Umfangsschwingungen bei, auf welchen die Massendurchflußmessung beruht. Dabei erscheint es als besonders vorteilhaft, für die Umfangsschwingungen den Mode mit der Ordnungszahl n gleich drei oder vier zu wählen. Bei dieser Erfindungsausbildung treten unvermeidlich aufgrund der Biegeschwingungen an den Einspannstellen des Meßrohres Wechsel-Drehmomente auf. Deren gegebenenfalls unerwünschte Auswirkungen können beispielsweise durch mechanische Filteranordnungen, bestehend zum Beispiel aus Masse- und/oder Federund/oder Dämpferelementen, eingedämmt oder ausgeschaltet werden.

Die periodische Verformung des Meßrohres läßt sich zweckmäßigerweise dadurch erzielen, daß die Meßrohrwände entsprechend ausgelenkt werden durch extern erzeugte, auf die Meßrohrwand gerichtete Wechselkräfte, deren Frequenz mit einer der Eigen-/Resonanzfrequenzen der Umfangsschwingungen des Meßrohres übereinstimmt. Dadurch läßt sich der Verbrauch an aufzubringender Schwingungsenergie zur Erzielung eines ausreichenden Meßeffektes vermindern.

Gemäß einer besonderen Ausbildung der Erfindung werden auf einander diametral gegenüberliegenden Teilen oder Stellen der Meßrohrwand Kräfte in Angriff gebracht, die zueinander um 180° phasenverschoben sind. Dadurch wird in diesem Bereich das Meßrohr spiegelsymmetrisch zu seiner Mittelachse auf Zug beziehungsweise Druck belastet. Hierdurch läßt sich eine gut detektierbare Auslenkung der Meßrohrwand über die Meßrohrlänge erreichen. Vorzugsweise befinden sich die Angriffsstellen der Kräfte im mittleren Bereich des Meßrohres, weil dort die Fluidmasse weder Verformungsenergie aufnimmt noch abgibt, also nahezu keine Corioliskräfte angreifen. Außerdem ist dort der Einfluß etwaiger fester Einspannstellen des Meßrohres, welcher der Auslenkung der Meßrohrwand entgegenwirkt, am geringsten.

Um bei der Messung der Phasenverschiebung der Auslenkungen der Meßrohrwände über die Meßrohrlänge eine hohe Auflösung zu erzielen, werden hierfür zwei Meßstellen möglichst weit voneinander entfernt angeordnet. Vorzugsweise sind sie in der Nähe des einlauf- und auslaufseitigen Endes des Meßrohres vorgesehen.

Bei einem Meßgerät zur Anwendung der Erfindung kommt es wesentlich darauf an, daß der die periodischen Verformungen des Meßrohres erzeugende Schwingungserreger so aufgebaut und angeordnet ist, daß die Meßrohrwand im wesentlichen gleichmäßig bezüglich der Mittelachse beziehungsweise Schwerelinie des Meßrohres und senkrecht zur Strömungsrichtung des Fluids ausgelenkt wird. Die Wandbewegungen kompensieren dabei einander derart, daß die ursprüngliche, schwerpunktmäßige Balance des Meßgeräts weitgehend beibehalten wird.

Dies erfolgt nach einer besonderen Ausbildung der Erfindung dadurch, daß zwei beispielsweise elektromagnetische, elektroakustische und/oder elektrostatische Schwingungserreger jeweils mit Wandabschnitten des Meßrohres in Wirkungsverbindung stehen, die einander gegenüberliegen. Vorzugsweise sind die von den Schwingungserregern erzeugten Schwingungen zueinander um 180° phasenverschoben. Dadurch wird eine um die Schwerelinie des Meßrohres herum besonders gleichmäßige sowie gut detektierbare Verformung des Meßrohres erzielt.

Nach einer alternativen Ausbildung der Erfindung werden die Umfangsschwingungen des Meßrohres durch einen einzigen Schwingungserreger erzeugt, der mit wenigstens einem Teil der Meßrohrwand in Wirkungsverbindung steht. Dies läßt eine besonders kostengünstige Herstellung eines Massendurchfluß-Meßgeräts möglich werden. Je nach Ausbildung des Schwingungserregers werden am Meßrohr Ungleichgewichte verursacht. Um diese auszubalancieren, wird erfindungsgemäß an dem Bereich der Meßrohrwand, der dem Schwingungserreger diametral gegenüberliegt, ein Ausgleichskörper angebracht.

Um den Einsatz einfach aufgebauter und anwendbarer Schwingungserreger zu ermöglichen, können Meßrohre verwendet werden, die eine zu ihrer Längsachse symmetrische Form besitzen, wie zum Beispiel Zylinderform. Mit Vorteil werden Meßrohre eingesetzt, die im Schnitt quer zur Strömungsrichtung mehreckig sind. Besitzt das Meßrohr beispielsweise quadratische Querschnittsform, so bilden die vier Ecken jeweils Zonen, in denen die Meßrohrwände nahezu keine Auslenkung erfahren (Schwingungsknoten). Das bedeutet andererseits, daß Zonen mit maximaler Auslenkung der Meßrohrwand hauptsächlich in den mittleren Bereichen der von den Ecken gebildeten Seitenabschnitte auftreten (Schwingungsbäuche). Damit werden an der Meßrohrwand Bereiche geschaffen, die besonders günstige Voraussetzungen zur Detektion der Phasenverschiebung haben.

Mit Vorteil werden zur Messung der Auslenkung der Meßrohrwände nach optischem Prinzip arbeitende Sensoren eingesetzt. Diese weisen im Vergleich zu elektromechanischen Systemen ein sehr schnelles Ansprechverhalten und damit eine geringe Eigenphasenverschiebung auf.

Bezüglich weiterer vorteilhafter Ausbildungen der Erfindung wird auf die Unteransprüche und auf die nachfolgende Beschreibung anhand der Zeichnungen verwiesen. Es zeigen:

### Figuren 1A, 1B, 1C und 1D

in schematischer Darstellung Momentaufnahmen von Meßrohrquerschnitten, die in radiale Umfangsschwingungen unterschiedlicher Schwingungsmoden versetzt sind,

### Figur 2

ein Ausführungs beispiel einer erfindungsgemäßen Meßanordnung in teilweise geschnittener Ansicht,

### Figur 3

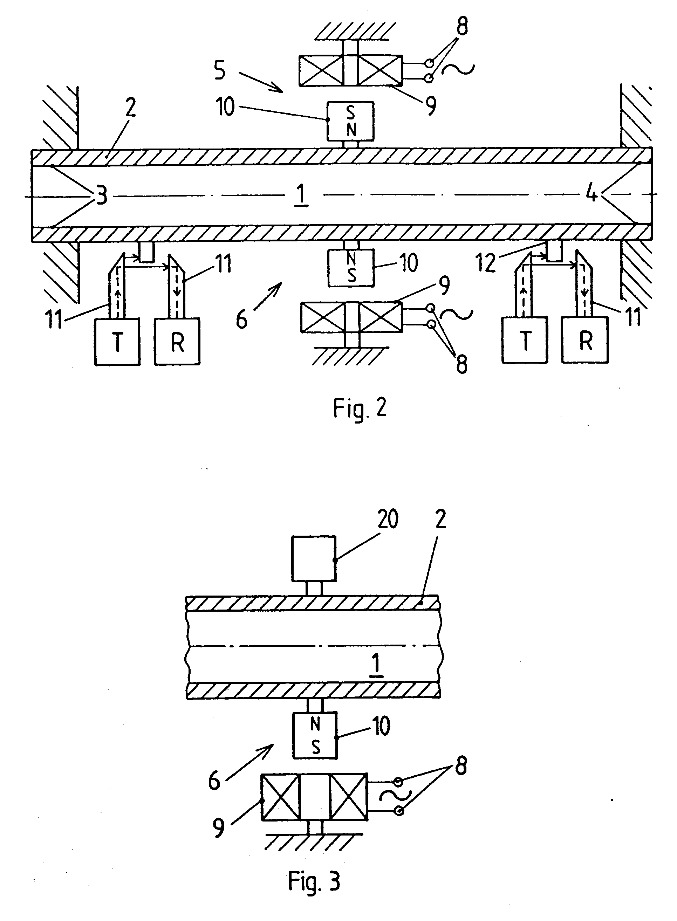

eine zur Schwingungserregung nach Figur 2 alternative Ausbildung der Schwingungserregung,

### Figur 4A

einen Längsabschnitt eines Meßrohres ohne Massendurchfluß,

### Figur 4B

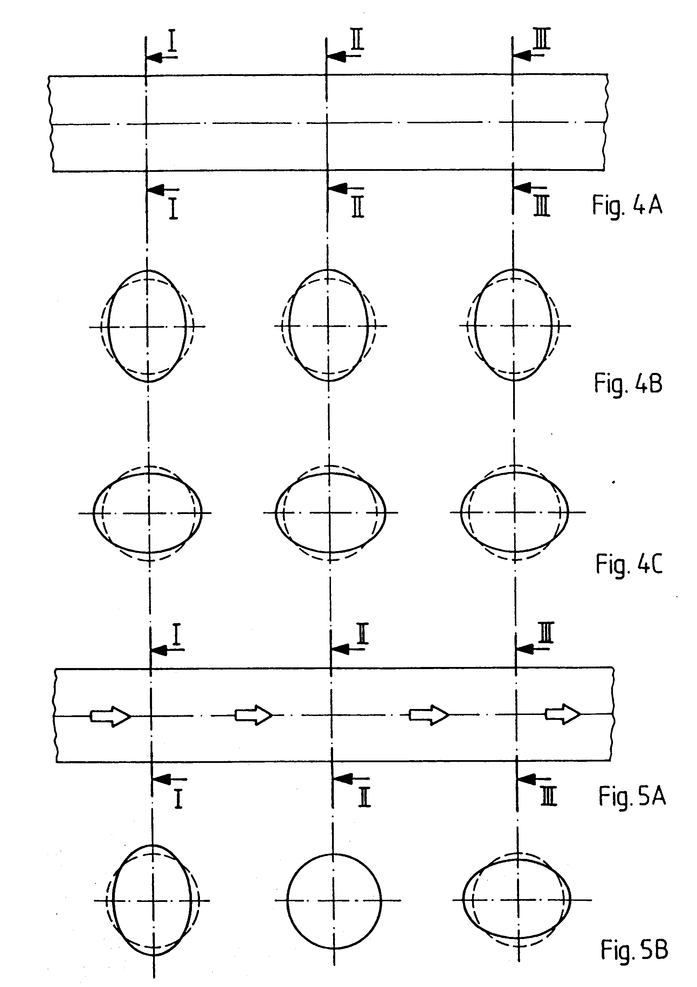

Querschnitte des erfindungsgemäß verwendeten Meßrohres längs der Linien I - I, II - II und III - III der Figur 4A in einem Zeitpunkt,

### Figur 4C

Querschnitte des erfindungsgemäß verwendeten Meßrohres längs der Linien I - I, II - II und III - III der Figur 4A in einem anderen Zeitpunkt,

### Figur 5A

einen Längsschnitt eines Meßrohres mit schematisch angedeutetem Massendurchfluß und

### Figur 5B

Querschnitte des erfindungsgemäß verwendeten Meßrohres längs der Linien I - I, II - II und III - III der Figur 5A in einem Zeitpunkt.

Einander entsprechende Teile in den Zeichnungen sind mit übereinstimmenden Bezugszeichen versehen.

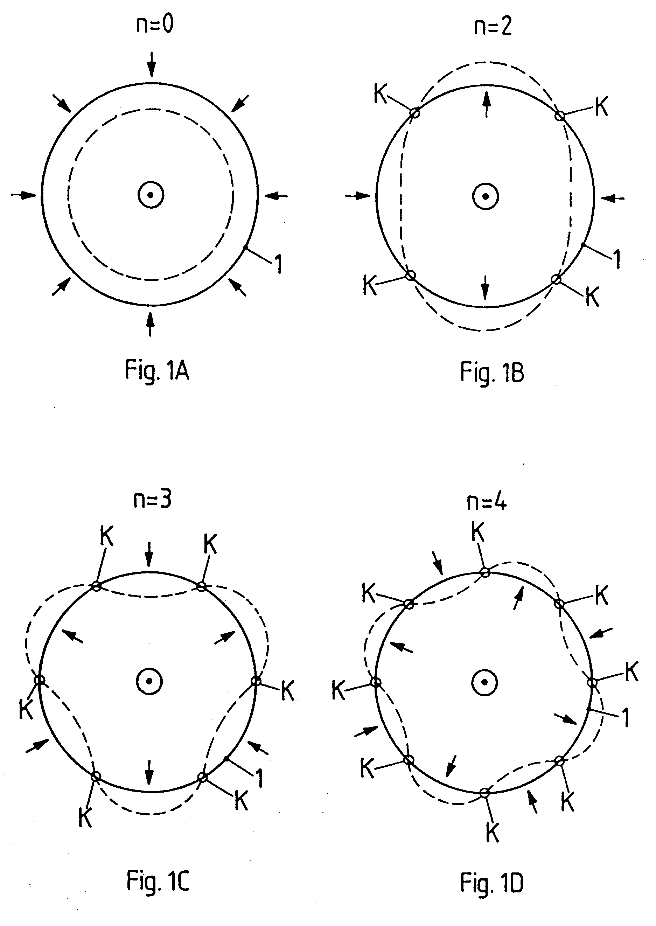

Gemäß den Figuren 1A - 1D werden zur Durchflußmessung nach der Erfindung einem Meßrohr 1 radiale Umfangsschwingungen aufgeprägt, deren Frequenzen den Eigenresonanzfrequenzen des Meßrohres im Umfangsschwingungsmode entsprechen. Dies führt zu den oben genannten, periodischen Verformungen/Deformationen der lichten Querschnittsfläche des Meßrohres 1. Diese sind in den Figuren 1A - 1D gestrichelt angedeutet, während dort die kreisrunde, durchgezogene Linie die Meßrohrquerschnittsfläche im nicht schwingenden Ruhezustand wiedergibt. Die Zahl n gemäß Figuren 1A - 1D bezeichnet die Ordnung der Schwingungsmoden und gibt die Anzahl der Wellenlängen an, welche sich über den Umfang des Meßrohres erstrecken. Gemäß den Pfeilen in den Figuren 1A - 1D erfolgt nach der Erfindung die Auslenkung der Wand 2 des Meßrohres 1 stets in radialer Richtung entweder zum Mittelpunkt des Meßrohrquerschnitts oder von diesem weg. Etwaige entlang des Meßrohrquerschnitts auftretende Schwingungsknoten sind in den Figuren 1A - 1D mit dem Buchstaben K bezeichnet. Wie in den Figuren 1A - 1D jeweils durch einen umringten Punkt in der Querschnittsmitte des Meßrohres 1 angedeutet, verläuft die Strömungsrichtung des Fluids senkrecht zum Meßrohrquerschnitt in die Zeichenebene hinein.

Gemäß Figur 1A befindet sich der Umfang des Meßrohres 1 im Schwingungsmode n gleich Null. Das bedeutet, daß sich über den Meßrohrumfang keine Welle und keine Schwingungsbäuche und -knoten ausbilden. Der Durchmesser des Meßrohres 1 vergrößert sich beziehungsweise verkleinert sich mit einer einer bestimmten Resonanzfrequenz entsprechenden Periodendauer gleichmäßig über die den Meßrohrumfang bildende Meßrohrwand.

Gemäß Figur 1B befindet sich der Umfang des Meßrohres 1 im Schwingungsmode n gleich zwei. Das bedeutet, daß sich über den Umfang des Meßrohres 1 zwei Wellen jeweils in vollständiger Länge ausgebreitet haben, wobei sich vier Schwingungsknoten K gebildet haben, die über den Meßrohrumfang gleichmäßig verteilt und im wesentlichen im gleichen Abstand voneinander liegen. Im Bereich der zwischen den Knoten befindlichen Schwingungsbäuche werden einander diametral gegenüberliegende Wandteile des Meßrohres 1 jeweils gegensinnig, das heißt in entgegengesetzter Richtung, ausgelenkt.

Gemäß Figur 1D befindet sich der Umfang des Meßrohres 1 im Schwingungsmode n gleich vier, was vier Wellen mit acht Schwingungsknoten gleichmäßig über den Umfang des Meßrohres 1 verteilt bedeutet. Im übrigen gelten hier die Ausführungen zu Figur 1B entsprechend.

Gemäß Figur 1C befindet sich der Umfang des Meßrohres 1 im Schwingungsmode n gleich drei, was drei Wellenlängen mit sechs Schwingungsknoten gleichmäßig über den Meßrohrumfang verteilt bedeutet. Wie anhand der Pfeile ersichtlich, werden bei dieser Ausbildung der Erfindung diametral gegenüberliegende Wandteile, soweit sie nicht mit den Bereichen der Schwingungsknoten K zusammenfallen, gleichsinnig, das heißt jeweils in gleicher Richtung,ausgelenkt.

Die Schwingungsknoten mit n größer oder gleich zwei sind allgemein als "HOOPE'sche Schwingungsmoden" bekannt.

Gemäß Figur 2 weist das erfindungsgemäße Massendurchfluß-Meßgerät im wesentlichen ein Meßrohr 1, einen ersten und zweiten Schwingungserreger 5, 6 sowie zwei optische Sensoreinrichtungen T, R auf. Die den von Fluid durchströmten Hohlraum bildende Wand des Meßrohres 1 ist in Figur 1 im Längsschnitt dargestellt. Wie schematisch angedeutet, sind das einlaufseitige Ende 3 und das auslaufseitige Ende 4 des Meßrohres 1 jeweils fest eingespannt. Grundsätzlich ist auch eine freie Aufhängung der Meßrohrenden 3, 4 möglich. Etwa in der Mitte des Meßrohres 1 sind der erste beziehungsweise der zweite Schwingungserreger 5, 6 derart angeordnet, daß sie einander symmetrisch zur (strichpunktiert dargestellten) Mittelachse des Meßrohres 1 gegenüberliegen. Die elektromechanischen Schwingungserreger 5, 6 weisen im wesentlichen jeweils eine über die Anschlüsse 8 mit Wechselstrom gespeiste Erregerspule 9 sowie einen damit in Wirkungsverbindung stehenden Dauermagneten 10 mit Südpol S und Nordpol N auf. Die Dauermagneten 10 sind unmittelbar an der Meßrohrwand 2 befestigt, während die Erregerspulen 9 extern fixiert sind. Die optischen Sensoren T, R sind im einlaufbeziehungsweise auslaufseitigen Bereich angeordnet und bestehen im wesentlichen aus einem Lichtsender T, einer Lichtleitereinrichtung 11, einem Lichtempfänger R und unmittelbar an der Meßrohrwand 2 angebrachten Tauchfahnen 12.

Die Funktionsweise ist wie folgt: Fließt durch die Erregerspulen 9 ein Wechselstrom bestimmter Frequenz, so werden die Dauermagneten 10 mit bestimmter Periode abwechselnd angezogen und abgestoßen. Entsprechend wirken Kräfte auf die Meßrohrwand 2, so daß diese mit bestimmter Periode abwechselnd auf Zug und Druck belastet wird. Dies führt zu elastisch-reversiblen Verformungen des Querschnitts des Meßrohres 1. Bei Massendurchfluß sind diese Verformungen und die damit verbundenen Auslenkungen der Meßrohrwand 2 über die Länge des Meßrohres 1 phasenverschoben. Der Phasenverschiebung entsprechen zueinander zeitlich verschobene Bewegungen der an der Meßrohrwand 2 angebrachten Tauchfahnen 12. Die Tauchfahnen 12 ragen jeweils in einen Spalt, der von der Lichtleitereinrichtung 11 gebildet wird. Im gezeichneten Ausführungsbeispiel besteht die Lichtleitereinrichtung aus zwei Stäben aus lichtleitendem Material, beispielsweise Saphirstäben. Der Sender T erzeugt einen Lichtstrom, der über die Lichtleitereinrichtung 11 einschließlich des von ihr gebildeten (Luft-) Spalts zum Lichtempfänger R gelangt. Dabei hängt die Stärke des übertragenen Lichtstroms von der Tiefe ab, mit welcher die Tauchfahnen in den (Luft-) Spalt hineinragen. Je tiefer sie hineinragen, umso geringer ist der Lichtstrom. Die Tiefe, mit welcher die Tauchfahnen 11 in den Spalt hineinragen, wird von der Auslenkung der Meßrohrwand 2 bestimmt. Infolgedessen ist der Unterschied zwischen den beiden von den optischen Sensoren T, R gelieferten Lichtstärken ein Maß für die zeitliche Verschiebung beziehungsweise Phasenverschiebung der Verformung des Querschnitts des Meßrohres über dessen Länge.

Gemäß Figur 3 liegt es auch im Rahmen der Erfindung, die Schwingungserregung mit einem einzigen Schwingungserreger 6 durchzuführen. Ist dieser wie nach Figur 2 elektromagnetisch mit Erregerspulen und an der Meßrohrwand 2 angebrachten Dauermagneten 10 realisiert, ist ein gewichtsmäßiger Ausgleich der Masse des Dauermagneten 10 zweckmäßig. Hierzu ist gemäß Figur 3 ein Ausgleichskörper 20 vorgesehen. Dieser kann von außen an der Wand 2 des Meßrohres 1 in dem Bereich befestigt sein, der dem Wandbereich diametral gegenüberliegt, an dem der Dauermagnet 10 befestigt ist. Die Masse/das Gewicht des Ausgleichskörpers 20 ist so bemessen, daß durch den Dauermagneten verursachte Ungleichgewichte ausgeglichen werden. Im übrigen kann der in Figur 3 nicht dargestellte Teil der Meßanordnung wie nach Figur 2 ausgeführt sein.

Die Funktionsweise der erfindungsgemäßen Durchflußmessung ist in den Figuren 4A - C und 5A und B weiter veranschaulicht.

In Figur 4A ist der wesentliche Längsabschnitt des Meßrohres eines Massendurchfluß-Meßgerätes schematisch dargestellt. Dabei ist zu unterstellen, daß die (strichpunktiert gezeichnete) Schnittlinie II - II etwa im mittleren Bereich des Meßrohres liegt. Zweckmäßigerweise ist dort das Schwingungserregungssystem, wie es zum Beispiel gemäß Figuren 2 oder 3 ausgeführt sein kann, angeordnet. Die Schnittlinien I - I und III - III kennzeichnen die Stellen, an denen sich die Sensoren zur Erfassung der Phasenverschiebung über die Meßrohrlänge befinden. Ferner ist in der Darstellung nach Figur 4A vorausgesetzt, daß kein Massendurchfluß durch das Meßrohr existiert. Wird das Schwingungserregungssystem in Betrieb gesetzt, wird der Querschnitt des Meßrohres über dessen ganze Länge näherungsweise oval verformt, wie in den Figuren 4B und 4C dargestellt. Dort sind die Verformungen der Querschnitte längs der Linien I - I, II - II und III - III der Figur 4A jeweils mit durchgezogener Linie gezeichnet. Mit der gestrichelten Linie sind die Querschnitte angedeutet, wie sie ohne Betrieb eines Schwingungserregungssystems aussehen würden. Die Figuren 4B und 4C stellen gesonderte, voneinander zeitlich versetzte Momentaufnahmen dar, wobei der Zeitversatz einer Phasenverschiebung der erregten Meßrohrschwingungen von etwa 180° entspricht. Das bedeutet, daß die Umfangsabschnitte der Meßrohrwand, die nach Figur 4B gegenüber dem Ausgangsquerschnitt gemäß gestrichelter Linie nach außen ausgelenkt sind, nach Figur 4C zum Meßrohrinneren hin eingedrückt sind. Die Verformungen der Querschnitte des Meßrohres sind in den Bereichen der Linien I - I, II - II und III - III, wie dargestellt, weitgehend miteinander in Phase, weil aufgrund fehlenden Massendurchflusses keine Corioliskräfte angreifen.

Beim schematisch dargestellten Längsabschnitt eines Rohres gemäß Figur 5A herrscht Massendurchfluß vor, wie durch die dortigen, nach rechts gerichteten Pfeile angedeutet. Ferner ist unterstellt, daß der Querschnitt des Meßrohres durch Umfangsschwingungen gemäß Figuren 4B und 4C im wesentlichen über die ganze Meßrohrlänge verformt wird. Nun muß das durch das Meßrohr strömende Fluid einlaufseitig aufgrund der radialen Umfangsschwingungen Energie aufnehmen und auslaufseitig diese aufgenommene Energie wieder abgeben. Dies führt zur Entstehung von Corioliskräften, die im Bereich der einlaufseitigen Hälfte des Meßrohres die Auslenkungen der Meßrohrwand verzögern und im Bereich der auslaufseitigen Hälfte des Meßrohres die Auslenkungen der Meßrohrwand beschleunigen. Daraus resultieren Phasenverschiebungen zwischen den Auslenkungen der Wandabschnitte entlang der durchströmten Länge des Meßrohres. Dementsprechend ist der Querschnitt des Meßrohres gemäß Linie I - I der Figur 5A anders deformiert als der gemäß der Linie III - III der Figur 5A, wie in Figur 5B mittels der durchgezogenen Linien (stark übertrieben) angedeutet. Die gestrichelte Linie in Figur 5B zeigt den Meßrohrquerschnitt, wie er ohne Einprägung von Verformungsschwingungen aussehen würde. Gemäß Figur 5B fällt in der Schnittdarstellung gemäß der Linie II - II der Figur 5A der Querschnitt ohne Verformungsschwingungen mit dem bei Einprägung von Verformungsschwingungen zusammen. Dies fußt darauf, daß die Schnittlinie II - II die Mitte des Meßrohres kennzeichnet, und dort nimmt die strömende Fluidmasse weder Schwingungsenergie auf noch gibt sie welche ab. Folglich treten in der Mitte des Meßrohrs keine Corioliskräfte auf, so daß dort der Bezugspunkt und/oder Nullpunkt der Phasenverschiebung anzunehmen ist. Um eine hohe Meßauflösung zu erzielen, wird die Phasenverschiebung vorzugsweise an den durch die Schnittlinien I - I und III - III bezeichneten Wandabschnitten gemessen. Die Phasenverschiebung vergrößert beziehungsweise vermindert sich bei zunehmendem beziehungsweise abnehmendem Massendurchfluß.

## Patentansprüche

1. Verfahren zur Massendurchflußmessung nach dem Coriolisprinzip mit einem einzigen von Fluid durchströmten, elastisch verformbaren Meßrohr (1), das periodisch erregt wird und bei dem als Maß für den Massendurchfluß Phasenverschiebungen zwischen Auslenkungen von in Strömungsrichtung unterschiedlich angeordneten Abschnitten der Meßrohrwand (2) gemessen werden,
**gekennzeichnet durch**
eine derartige, radiale Umfangsschwingungen erzeugende, periodische Verformung der lichten Querschnittsfläche des Meßrohrs (1), daß bei konstanter Lage seiner Schwerelinie einander diametral gegenüberliegende Teile der Meßrohrwand (2) quer zur Strömungsrichtung des Fluids jeweils etwa gleich stark in gleicher oder in zueinander entgegengesetzter Richtung erregt werden.

2. Verfahren nach Anspruch 1, bei dem die Frequenz der Verformung der lichten Querschnittsfläche im Bereich einer der Eigenresonanzfrequenzen der radialen Umfangsschwingungen des Meßrohrs (1) liegt.

3. Verfahren nach Anspruch 1 oder 2, bei dem den radialen Umfangsschwingungen Biegeschwingungen überlagert werden, deren Frequenz im Bereich einer der Eigenresonanzfrequenzen des Meßrohrs (1) liegt.

4. Verfahren nach Anspruch 3, bei dem radialen Umfangsschwingungen mit einer Eigenresonanzfrequenz dritter oder vierter Ordnung Biegeschwingungen mit einer Eigenresonanzfrequenz zweiter Ordnung überlagert werden.

5. Verfahren nach einem der Ansprüche 1 bis 4, bei dem wenigstens eine Kraft, die ihre Richtung mit einer, einer Eigenresonanzfrequenz des Meßrohrs (1) entsprechenden, Frequenz umkehrt, an einer Stelle seiner Wand (2) in Angriff gebracht wird.

6. Verfahren nach Anspruch 5, bei dem die Kraft etwa in der Mitte der Länge des Meßrohrs (1) angreift.

7. Verfahren nach Anspruch 5 oder 6, bei dem wenigstens einem Paar der diametral gegenüberliegenden Teile der Meßrohrwand (2) jeweils mindestens eine senkrecht zur Strömungsrichtung angreifende Kraft zugeordnet ist, wobei deren Richtungen stets zueinander entgegengesetzt sind.

8. Nach dem Coriolisprinzip arbeitendes Massendurchflußmeßgerät, insbesondere zur Durchführung des Verfahrens nach einem der Ansprüche 1 bis 7, mit einem einzigen in eine Fluidleitung einfügbaren, elastisch verformbaren Meßrohr (1), das periodisch erregt wird und bei dem als Maß für den Massendurchfluß Phasenverschiebungen zwischen Auslenkungen von in Strömungsrichtung unterschiedlich angeordneten Abschnitten der Meßrohrwand (2) gemessen werden,
**gekennzeichnet durch**
mindestens einen am Meßrohr (1) angeordneten Schwingungserzeuger (5, 6), der so auf das Meßrohr einwirkt, daß bei konstanter Lage seiner Schwerelinie einander diametral gegenüberliegende Teile der Meßrohrwand (2) quer zur Strömungsrichtung des Fluids jeweils etwa gleich stark in gleicher oder in zueinander entgegengesetzter Richtung erregt werden.

9. Massendurchflußmeßgerät nach Anspruch 8 mit einem geraden Meßrohr (1) kreisförmiger Querschnittsfläche.

10. Massendurchflußmeßgerät nach Anspruch 8, dessen Meßrohr (1) eine Querschnittsfläche oder ein Außenprofil mit mehreren Ecken aufweist.

11. Massendurchflußmeßgerät nach Anspruch 10, bei dem die Anzahl der Ecken zwei oder ein Vielfaches von zwei beträgt.

12. Massendurchflußmeßgerät nach einem der Ansprüche 8 bis 11 mit einem Phasendetektorsystem (T, R) aus mindestens zwei Sensoren, die jeweils bezüglich der Stelle der Meßrohrwand (2) mit dem Schwingungserreger (5, 6) um 90° in Umfangsrichtung versetzt sind.

13. Massendurchflußmeßgerät nach Anspruch 10 oder 11 mit einem Phasendetektorsystem (T, R) aus mindestens zwei Sensoren, die jeweils in der Mitte der von zwei Ecken gebildeten Strecke angeordnet sind.

14. Massendurchflußmeßgerät nach einem der Ansprüche 8 bis 13 mit mindestens einer derart ausgebildeten Sensoranordnung (T, R, 11, 12) aus einem Lichtsender (T), einem Lichtempfänger (R) und einer das Licht des Lichtsenders zum Lichtempfänger übertragenden Lichtleitereinrichtung (11), daß die Stärke des übertragenen Lichtstroms durch die Auslenkung der Meßrohrwand (2) beeinflußt wird.

15. Massendurchflußmeßgerät nach Anspruch 14, bei dem die Lichtleitereinrichtung (11) zwei Saphirstäbe aufweist, von denen der eine an seinem einen Ende mit dem Lichtsender (T) und der andere an seinem einen Ende mit dem Lichtempfänger (R) verbunden ist, wobei die jeweiligen anderen Enden als totalreflektierende Prismen ausgebildet sind und mit Abstand so gegenüberliegen, daß der vom Lichtsender (T) aus durch den einen Saphirstab geführte Lichtstrom in den anderen Saphirstab übertritt und darin zum Lichtempfänger (R) geleitet wird, und wobei an der Meßrohrwand (2) mindestens eine Tauchfahne so angebracht ist, daß sie in Abhängigkeit von der Auslenkung der Meßrohrwand (2) in den Spalt zwischen den prismenförmigen Enden der Saphirstäbe mehr oder weniger weit hineinragt.

16. Massendurchflußmeßgerät nach einem der Ansprüche 8 bis 15, bei dem die mechanische Schwingungserregung mittels elektromagnetischer, elektrostatischer und/oder elektroakustischer Wandler erfolgt.

17. Massendurchflußmeßgerät nach Anspruch 16 mit einem elektromagnetischen Schwingungserreger, der im wesentlichen aus einem außerhalb des Meßrohrs(1) fest angebrachten Elektromagneten (9) und einem diesem gegenüberliegend an der Meßrohrwand (2) befestigten Dauermagneten (10) besteht, und mit einem Ausgleichskörper (20), der an der Meßrohrwand (2) dem Dauermagneten (10) diametral gegenüberliegend angeordnet ist und dessen Masse etwa der des Dauermagneten (10) entspricht.

18. Massendurchflußmeßgerät nach einem der Ansprüche 8 bis 17 mit mindestens zwei Schwingungserregern (5, 6), die an diametral gegenüberliegenden Stellen der Meßrohrwand (2) angeordnet sind und deren erzeugte Schwingungen um 180° gegeneinander phasenverschoben sind.

## Claims

1. Method for mass flow by the Coriolis principle with a single elastically deformable measuring tube through which fluid flows and which is periodically stimulated and in which as a measure of the mass flow phase displacements between deflections and portions of the measuring tube wall (2) arranged differently in the flow direction are measured,
characterized by
a periodic deformation of the internal cross-sectional area of the measuring tube (1) generating radial peripheral oscillations in such a manner that with constant position of the centroidal axis diametrically disposed portions of the measuring tube wall (2) are stimulated transversely of the flow direction of the fluid to substantially the same extent in the same direction or in opposite direction to each other.

2. Method according to claim 1, wherein the frequency of the deformation of the internal cross-sectional area lies in the range of one of the natural resonance frequencies of the radial peripheral oscillations of the measuring tube (1).

3. Method according to claim 1 or 2, wherein the radial peripheral oscillations have superimposed thereon flexural oscillations having a frequency in the range of one of the natural resonance frequencies of the measuring tube (1).

4. Method according to claim 3, wherein flexural oscillations having a natural resonance frequency of the second order are superimposed on radial peripheral oscillations with a natural resonance frequency of the third or fourth order.

5. Method according to any one of claims 1 to 4, wherein at least one force which reverses its direction with a frequency corresponding to a natural resonance frequency of the measuring tube (1) is applied at a point of the wall (2) thereof.

6. Method according to claim 5, wherein the force engages substantially in the centre of the length of the measuring tube (1).

7. Method according to claim 5 or 6, wherein at least one pair of the diametrically opposite portions of the measuring tube wall (2) has associated therewith at least one respective force engaging perpendicularly to the flow directions, the directions of said forces always being opposite to each other.

8. Mass flow meter operating by the Coriolis principle, in particular for carrying out the method according to any one of claims 1 to 7, comprising a single elastically deformable measuring tube (1) which is adapted to be inserted into a fluid conduit and which is periodically excited and in which phase displacements between deflections of portions of the measuring tube wall (2) differently arranged in the flow direction are measured as a measure of the mass flow,
characterized by
at least one oscillation exciter (5,6) which is arranged on the measuring tube (1) and which acts on the latter in such a manner that with constant position of its centroidal axis diametrically opposite portions of the measuring tube (2) are stimulated transversely of the flow direction of the fluid to substantially the same extent in the same direction or in the opposite direction to each other.

9. Mass flow meter according to claim 8 comprising a rectilinear measuring tube (1) of circular cross-sectional area.

10. Mass flow meter according to claim 8, the measuring tube (1) of which has a cross-sectional area or an outer profile with a plurality of corners.

11. Mass flow meter according to claim 10, wherein the number of corners is two or a multiple of two.

12. Mass flow meter according to any one of claims 8 to 11 comprising a phase detector system (T,R) having at least two sensors which are arranged offset by 90° in the peripheral direction in each case with respect to the point of the measuring tube wall (2) with the oscillation exciter (5,6).

13. Mass flow meter according to claim 10 or 11 comprising a phase detector system (T,R) having at least two sensors which are each arranged in the centre of the line defined by two corners.

14. Mass flow meter according to any one of claims 8 to 13 comprising at least one sensor arrangement (T,R, 11,12) having a light transmitter (T), a light receiver (R) and an optical waveguide means (11) transmitting the light of the light transmitter to the light receiver and being constructed in such a manner that the intensity of the light flux is influenced by the deflection of the measuring tube wall (2).

15. Mass flow meter according to claim 14, wherein the optical waveguide means (11) comprises two sapphire rods of which one is connected at its one end to the light transmitter (T) and the other is connected at its one end to the light receiver (R), the respective other ends being constructed as total-reflecting prisms and being arranged opposite each other in spaced relationship in such a manner that the light flux conducted from the light transmitter (T) through the one sapphire rod passes to the other sapphire rod and is conducted therein to the light receiver (R), and at the measuring tube wall (2) at least one immersion lug is disposed in such a manner that in dependence upon the deflection of the measuring tube wall (2) it projects to a greater or lesser extent into the gap between the prism-like ends of the sapphire rods.

16. Mass flow meter according to any one of claims 8 to 15, wherein the mechanical oscillation excitation is effected by means of electromagnetic, electrostatic and/or electroacoustic transducers.

17. Mass flow meter according to claim 16 comprising an electromagnetic oscillation exciter which consists essentially of an electromagnet (9) fixedly attached outside the measuring tube (1) and a permanent magnet (10) mounted opposite said electromagnet on the measuring tube wall (2), and a compensating body (20) which is arranged on the measuring tube wall (2) diametrically opposite the permanent magnet (10) and the mass of which corresponds substantially to that of the permanent magnet (10).

18. Mass flow meter according to any one of claims 8 to 17 comprising at least two oscillation exciters (5,6) which are arranged at diametrically opposite points of the measuring tube wall (2) and the oscillations of which are phase-displaced by 180° with respect to each other.

## Revendications

1. Procédé de mesure de débit massique selon le principe de Coriolis, à l'aide d'un seul tube de mesure (1) déformable élastiquement, qui est traversé par le fluide en écoulement et qui est soumis à une excitation périodique, et selon lequel on mesure en tant que grandeur pour le débit massique, des déphasages entre des déviations de tronçons de la paroi (2) du tube de mesure, disposés de manière différente dans la direction de l'écoulement,
caractérisé par
une déformation périodique de la surface de la section droite de passage du tube de mesure (1), engendrant des vibrations périphériques radiales, de manière à ce que pour une position constante de la ligne des centres de gravité du tube de mesure, des parties diamétralement opposées de la paroi (2) du tube de mesure subissent respectivement une excitation transversalement à la direction de l'écoulement du fluide, d'une intensité approximativement égale, dans un même sens ou dans des sens opposés l'un à l'autre.

2. Procédé selon la revendication 1, selon lequel la fréquence de la déformation de la surface de la section droite de passage, se situe dans la zone d'une des fréquences de résonance propres des vibrations périphériques radiales du tube de mesure (1).

3. Procédé selon la revendication 1 ou 2, selon lequel on superpose aux vibrations périphériques radiales, des vibrations de flexion dont la fréquence se situe dans la zone d'une des fréquences de résonance propres du tube de mesure (1).

4. Procédé selon la revendication 3, selon lequel on superpose à des vibrations périphériques radiales d'une fréquence égale à la fréquence de résonance propre du troisième ou du quatrième ordre, des vibrations de flexion d'une fréquence égale à la fréquence de résonance propre du second ordre.

5. Procédé selon l'une des revendications 1 à 4, selon lequel au moins une force, qui inverse sa direction avec une fréquence correspondant à une fréquence de résonance propre du tube de mesure (1), est amenée à agir en un point de sa paroi (2).

6. Procédé selon la revendication 5, selon lequel la force agit environ au milieu de la longueur du tube de mesure (1).

7. Procédé selon la revendication 5 ou 6, selon lequel à chaque partie d'au moins une paire des parties diamétralement opposées de la paroi (2) du tube de mesure, est associée au moins une force agissant perpendiculairement à la direction de l'écoulement, les sens de ces forces étant constamment opposés.

8. Appareil de mesure de débit massique fonctionnant selon le principe de Coriolis, notamment pour la mise en oeuvre du procédé selon l'une des revendications 1 à 7, à l'aide d'un seul tube de mesure (1) déformable élastiquement, qui peut être inséré dans une conduite de fluide et qui est soumis à une excitation périodique, appareil dans lequel on mesure en tant que grandeur pour le débit massique, des déphasages entre des déviations de tronçons de la paroi (2) du tube de mesure, disposés de manière différente dans la direction de l'écoulement
caractérisé par
au moins un générateur de vibrations (5, 6) disposé sur le tube de mesure (1) et agissant sur celui-ci de manière à ce que pour une position constante de la ligne des centres de gravité du tube de mesure, des parties diamétralement opposées de la paroi (2) du tube de mesure subissent respectivement une excitation transversalement à la direction de l'écoulement du fluide, d'une intensité approximativement égale, dans un même sens ou dans des sens opposés l'un à l'autre.

9. Appareil de mesure de débit massique selon la revendication 8, comportant un tube de mesure (1) rectiligne de surface de section droite de forme circulaire.

10. Appareil de mesure de débit massique selon la revendication 8, dont le tube de mesure (1) présente une surface de section droite ou un profil extérieur comportant plusieurs sommets.

11. Appareil de mesure de débit massique selon la revendication 10, dans lequel le nombre des sommets est égal à deux ou à un multiple de deux.

12. Appareil de mesure de débit massique selon l'une des revendications 8 à 11, comportant un système de détection de phase (T, R) composé d'au moins deux détecteurs qui sont respectivement décalés de 90° en direction périphérique, par rapport à la position de la paroi (2) du tube de mesure comportant le générateur de vibrations (5, 6).

13. Appareil de mesure de débit massique selon la revendication 10 ou 11, comportant un système de détection de phase (T, R) composé d'au moins deux détecteurs qui sont disposés respectivement au milieu de l'intervalle formé entre deux sommets.

14. Appareil de mesure de débit massique selon l'une des revendications 8 à 13, comportant au moins un ensemble de détecteurs (T, R, 11, 12), composé d'un émetteur de lumière (T), d'un récepteur de lumière (R) et d'un dispositif de guide optique (11) transmettant la lumière de l'émetteur de lumière au récepteur de lumière, cet ensemble étant d'une configuration telle, que l'intensité du flux lumineux transmis soit influencée par la déviation de la paroi (2) du tube de mesure.

15. Appareil de mesure de débit massique selon la revendication 14, dans lequel le dispositif de guide optique (11) comporte deux barreaux de saphir, dont l'un est relié par l'une de ses extrémités à l'émetteur de lumière (T), et l'autre par une de ses extrémités au récepteur de lumière (R), les autres extrémités respectives étant réalisées sous la forme de prismes à réflexion totale, et disposées face à face, à distance l'une de l'autre, de manière à ce que le flux lumineux en provenance de l'émetteur de lumière (T) et guidé au travers de l'un des barreaux de saphir, passe dans l'autre barreau de saphir dans lequel il est conduit jusqu'au récepteur de lumière (R), au moins un talon plongeur étant disposé sur la paroi (2) du tube de mesure de manière à pénétrer plus ou moins, en fonction de la déviation de la paroi (2) du tube de mesure, dans l'interstice entre les extrémités en forme de prisme des barreaux de saphir.

16. Appareil de mesure de débit massique selon l'une des revendications 8 à 15, dans lequel l'excitation mécanique vibratoire s'effectue au moyen de transducteurs électromagnétiques, électrostatiques et/ou électroacoustiques.

17. Appareil de mesure de débit massique selon la revendication 16, comportant un générateur de vibrations électromagnétique, qui est composé essentiellement d'un électroaimant (9) monté de manière fixe à l'extérieur du tube de mesure (1), et d'un aimant permanent (10) opposé à l'électroaimant et fixé sur la paroi (2) du tuée de mesure, et un corps de compensation (20) qui est disposé sur la paroi (2) du tube de mesure en étant diamétralement opposé à l'aimant permanent (10), et dont la masse correspond environ à celle de l'aimant permanent (10).

18. Appareil de mesure de débit massique selon l'une des revendications 8 à 17, comportant au moins deux générateurs de vibrations (5, 6) qui sont disposés en des points diamétralement opposés de la paroi (2) du tube de mesure, et dont les vibrations produites sont déphasées de 180°.
